# EUROPÄISCHE PATENTSCHRIFT

(11) **EP 3 631 182 B1**
(45) Veröffentlichungstag und Bekanntmachung des Hinweises auf die Patenterteilung: **09.08.2023**
(21) Anmeldenummer: 18729593.6
(22) Anmeldetag: 22.05.2018
(51) Int. Cl.: F01N 13/18, F16L 27/10, F16L 39/04, F16L 27/111, F16L 51/02, F16L 55/033, F16L 11/20, F16L 55/04, F16L 27/107, F16L 11/16, F16L 11/15

(54) **LEITUNGSELEMENT MIT DÄMPFUNGSELEMENT**
LINE ELEMENT WITH DAMPING ELEMENT
ÉLÉMENT DE CONDUITE POURVU D'UN ÉLÉMENT AMORTISSEUR

(30) Priorität: 02.06.2017 DE 102017112264; 31.01.2018 DE 102018102101
(43) Veröffentlichungstag der Anmeldung: 08.04.2020
(73) Patentinhaber: Westfalia Metal Hoses GmbH, 57271 Hilchenbach (DE)
(72) Erfinder: HAUK, Stefan, 57271 Hilchenbach (DE); SELTER, Oliver, 57439 Attendorn (DE); BAUMHOFF, Dietmar, 57462 Olpe (DE); MÜNKER, Karl-Heinz, 57271 Hilchenbach (DE); GERHARD, Andreas, 57482 Wenden (DE); HENKELMANN, Michael, 57271 Hilchenbach (DE); SIEBELS, David Christopher, 44143 Dortmund (DE); SCKUDLAREK, Sascha Jan, 57258 Freudenberg (DE); WEISS, Matthias, 57271 Hilchenbach (DE); SCHENK, Karsten, 34613 Schwalmstadt (DE)
(74) Vertreter: Beckmann, Jürgen
(86) Internationale Anmeldenummer: PCT/EP2018/063382
(87) Internationale Veröffentlichungsnummer: WO 2018/219719

(56) Entgegenhaltungen:
- WO-A1-2016/005096
- WO-A1-2016/110737
- WO-A1-2017/016728
- DE-A1-102010 037 162
- US-A- 5 340 165

## Beschreibung

Die Erfindung betrifft ein Leitungselement mit einem Innenelement, einem Außenelement, und einem dazwischen angeordneten Dämpfungselement. Derartige Leitungselemente werden vorzugsweise in Abgasleitungen in Kraftfahrzeugen verbaut und verbinden einzelne, starre Leitungseinheiten flexibel miteinander.

Im Abgasstrang von Kraftfahrzeugen entstehen stets Schwingungen, die beispielsweise verursacht werden durch Unwuchten von Rotationselementen im Motor, Turbo oder in Nebenaggregaten, durch die pulsförmigen Druckverläufe des Verbrennungsmotors, oder durch die Fahrbewegungen in Verbindung mit Fahrbahn-Unebenheiten und deren Rückkopplung in das Fahrgestell.

Diesbezüglich haben Leitungselemente oder "Entkopplungselemente" die Aufgabe, derartige Schwingungen und Bewegungen im Abgassystem von Kraftfahrzeugen zu entkoppeln. Zudem gleichen sie mögliche Einbautoleranzen aus.

Aufgrund immer kleiner werdender Baugrößen muss die Flexibilität von Leitungselementen erhöht werden, was die Neigung zur Schwingung mit Eigenfrequenzen erhöht, wodurch sich die Lebendsauer mindert. Eine gute Dämpfung der Leitungselemente ist daher wichtig.

Aus der DE 20 2015 104 177 U1 sind verschiedene Ausführungsform von Leitungselementen bekannt, welche aus einem Innenschlauch und einem Außenschlauch bestehen, wobei in der Regel mindestens einer der Schläuche gasdicht ist. Weiterer Stand der Technik findet sich in der DE 10 2008 001 297 A1, DE 10 2011 053 131 A1, DE 10 2010 037 162 A1, DE 10 2015 102 258, WO 2017/016728 A1 und DE 10 2012 013946 A1. Alle genannten Dokumente werden durch Bezugnahme vollständig in vorliegende Anmeldung aufgenommen.

Die DE 10 2010 037 162 A1 offenbart die Anordnung eines Drahtgestrickes zwischen einem inneren metallischen Wickelschlauch und einem äußeren Membranbalg.

Die WO 2016/110737 A1 offenbart ein Leitungselement mit einem Wellbalg und einem darin angeordneten Wickelschlauch, wobei außen in mindestens einer axial verbreiterten Windung des Wellbalges ein Dämpfungsring angeordnet ist.

Die WO 2016/005096 A1 offenbart ein Leitungselement mit einem Draht als dämpfendes Kopplungselement zwischen einem Innenschlauch in einem Außenschlauch.

Ferner ist aus der US 2016/003388 A1 ein Leitungselement bekannt, welches einen flexiblen Wickelschlauch als Innenelement, ein hierum gewickeltes Gestrickeband sowie einen Wellbalg als Außenelement enthält. Angesichts dessen war es Aufgabe der vorliegenden Erfindung, einen einfachen und robusten alternativen Aufbau eines Leitungselementes mit Dämpfungselement bereitzustellen.

Diese Aufgabe wird erfindungsgemäß durch Leitungselemente nach Anspruch 1 gelöst. Vorteilhafte Weiterbildungen dieser Leitungselemente sind in den Unteransprüchen enthalten.

Ein erfindungsgemäßes Leitungselement enthält
- ein Innenelement;
- ein das Innenelement umgebendes Außenelement;
- ein zwischen Innenelement und Außenelement angeordnetes Dämpfungselement, beispielsweise aus einem Wickelschlauch.

Der Ausdruck "Gestricke" bezeichnet ganz allgemein eine regelmäßige oder unregelmäßige Anordnung von faden- oder faserförmigen Teilen, beispielsweise Metalldrähten. Durch seine Struktur mit vielen Zwischenräumen und Biegungen der Fäden/Fasern erreicht das Gestricke eine verhältnismäßig große Elastizität sowie durch die Relativbewegung und Reibung zwischen einzelnen Fäden/Fasern gute Dämpfungseigenschaften.

Das Innenelement und/oder das Außenelement stehen vorzugsweise punktuell, linienförmig, teilflächig oder vollflächig mit dem Dämpfungselement in Kontakt.

Beim Innenelement handelt es sich um einen Wickelschlauch, insbesondere um einen metallischen Wickelschlauch. Derartige Wickelschläuche sind in verschiedenen Ausführungsformen (einlagig, mehrlagig, agraffförmig, mit Innenschuppen und/oder Außenschuppen etc.) bekannt. Typische Ausführungsformen sind beispielsweise in der DE 20 2015 104 177 U1 beschrieben.

Des Weiteren kann das Außenelement des Leitungselementes als ein Wellbalg, ein Wickelbalg, oder ein Membranbalg ausgebildet sein. Während Wellbälge typischerweise durch in Verbindung mit einer Stauchoperation erfolgenden Innenhochdruckumformung aus einem Rohr hergestellt werden, sind Wickelbälge und Membranbälge im Profilbereich verschweißte, rotations-symmetrische oder wendelgewellte Elemente, die entweder zur Rotationsachse senkrecht ausgeprägte Wellungen oder spiralförmige Wellungen aufweisen. Eine gewickelte Balgstruktur kann vorzugsweise formschlüssig eingehakt oder überlappend oder stoffschlüssig verschweißt sein. Derartige Elemente werden beispielsweise in der DE 10 2008 001 297 A1 oder der DE 10 2011 053 131 A1 beschrieben.

Grundsätzlich ist das Material des Dämpfungselementes so gewählt, dass der Verschleiß durch die Reibung zum Innenelement und/oder Außenelement minimiert wird. Insbesondere kann so ein Abtragen des Werkstoffs des Außenelementes/Innenelementes im Kontaktbereich verhindert oder zumindest verringert werden. Dies kann beispielsweise durch eine geeignete Werkstoffauswahl und/oder Werkstoffbehandlung der sich kontaktierenden Schichten von Dämpfungselement und Innenelement/Außenelement erreicht werden.

Das Dämpfungselement besteht vorzugsweise aus einem leichter verschleißenden Material als das Innenelement und/oder das Außenelement. Insbesondere kann die Oberfläche des Dämpfungselementes weicher sein als der Werkstoff des Außenelementes und/oder des Innenelementes (gemessen beispielsweise in den Verfahren HR oder HV nach Rockwell bzw. Vickers), so dass das Material des Dämpfungselementes und nicht das Außenelement oder das Innenelement durch den Reibkontakt abgetragen wird.

Bei nicht erfindungsgemäßen Ausführungsformen kann das Dämpfungselement ein Drahtgestricke enthalten oder ganz hieraus bestehen.

Im vorstehenden Fall enthält das Dämpfungselement vorzugsweise (mindestens) einen Draht (Faden) mit einer Beschichtung.

Erfindungsgemäß kann das Dämpfungselement einen flexiblen Wickelschlauch, einen Wellbalg, eine Membranbalgstruktur oder eine gewickelte Balgstruktur enthalten oder hieraus bestehen. Für diese Ausführungsformen gelten die oben in Bezug auf das Innenelement bzw. Außenelement gemachten Erläuterungen analog. Insbesondere kann das Dämpfungselement ein flexibler Wickelschlauch aus Kupfer sein.

Wie bereits erwähnt kann ein derartiger Wickelschlauch in verschiedenen Ausführungsformen zum Einsatz kommen (einlagig, mehrlagig, agraffförmig, mit Innenschuppen und/oder Außenschuppen etc., vgl. DE 20 2015 104 177 U1).

Ein das Dämpfungselement bildender Wickelschlauch kann weiterhin vorzugsweise eine geringere Steifigkeit aufweisen als das Innenelement und/oder als das Außenelement (d.h. gleich große Kräfte oder Drehmomente bewirken am Dämpfungselement größere Veränderungen der Form als bei Elementen mit höherer Steifigkeit). Typischerweise ist dabei die im Betrieb vom Dämpfungselement erzeugte Verlustarbeit geringer als die des Innenelementes und/oder Außenelementes, d.h. seine Verformung spielt eine untergeordnete Rolle für das Dämpfungsverhalten des gesamten Leitungselementes.

Ferner kann optional eine Konditionierung der Oberfläche des Dämpfungselementes, des Innenelementes, und/oder des Außenelementes zur Anwendung kommen (vgl. WO 2017/016728 A1).

Das Dämpfungselement kann vorzugsweise mindestens einen der folgenden Werkstoffe enthalten oder hieraus bestehen: Kupfer, Kupferlegierungen, Bronze, Aluminium, Aluminiumlegierungen, Edelstahl, Stahl, Zink, Zinkphosphat, Titan, Tantal, Nickelbasislegierungen, Graphit, Aramide (z.B. Kevlar 9), Messing und/oder Molybdänsulfid.

Weiterhin kann das Außenelement und/oder das Innenelement mindestens einen der folgenden Werkstoffe enthalten oder hieraus bestehen: Edelstahl, Stahl, Zink, Aluminiumlegierungen, Kupfer, Titan, Tantal, Nickelbasislegierungen, Messing, und/oder Bronze.

Gemäß einer Weiterbildung der Erfindung kann das Innenelement und/oder das Außenelement zumindest in einem axialen Abschnitt des Leitungselementes einen nicht kreisförmigen Querschnitt aufweisen. Insbesondere kann es einen mehreckigen Querschnitt haben, wobei die Ecken typischerweise abgerundet sind. Des Weiteren ist ein unrundes Innen-/Außenelement in der Regel mit einem runden Außen-/Innenelement kombiniert. Durch die Unrundheit kann auf einfache Weise ein Punkt-, Linien oder Flächenkontakt hergestellt werden. Das Dämpfungselement passt sich in der Regel der Form des zwischen Innenelement und Außenelement gebildeten Hohlraumes an.

Weitere Informationen zu Leitungselementen mit einer koaxialen Anordnung eines Innen- und eines Außenelementes finden sich in der DE 20 2015 104 177 U1, welche durch Bezugnahme vollumfänglich in die vorliegende Anmeldung aufgenommen wird.

Im Folgenden wird die Erfindung mit Hilfe der Figuren beispielhaft näher erläutert. Dabei zeigt:
- Figur 1: einen Längsschnitt durch ein nicht-erfindungsgemäßes Leitungselement mit einem Drahtgestricke als Dämpfungselement;
- Figur 2: verschiedene mögliche Bandgeometrien des Innenelementes und des Dämpfungselementes;
- Figur 3: Querschnitte durch erfindungsgemäße Leitungselemente mit ovalem, dreieckigem, viereckigem, fünfeckigem und sechseckigem Innenelement,
- Figur 4: einen Längsschnitt durch ein erfindungsgemäßes Leitungselement mit einem Wickelschlauch als Dämpfungselement.

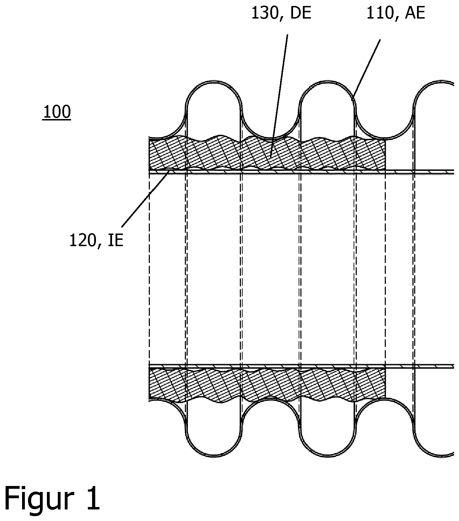

Figur 1 zeigt einen Längsschnitt durch ein nicht-erfindungsgemäßes Entkopplungselement oder Leitungselement 100, das aus dem Wickelschlauch 120 als Innenelement (in den Figuren auch mit "IE" bezeichnet), einem Außenelement 110 ("AE"), und einem Dämpfungselement 130 ("DE") gebildet wird. Im dargestellten Beispiel ist das Außenelement AE ein ringgewellter Membranbalg 110.

Das Dämpfungselement 130 kann sich axial über die gesamte Länge oder nur über einen Teil des Leitungselementes 100 erstrecken.

Das Dämpfungselement 130 wird beispielsweise durch ein Gestricke aus Kupferdraht gebildet. Dieses Kupfergestricke wird beim Zusammenbau des Leitungselementes 100 über das Innenelement 120 gezogen und dann in der Hülle des Außenelementes 110 montiert.

Die Vorteile des dargestellten Entkopplungselementes 100 liegen einer geringeren Fertigungskomplexität, dem Einsatz von Standardbauteilen, und guten Dämpfungseigenschaften. Weiterhin ist durch die Drahtdicke des Dämpfungselementes 130 dessen Lebensdauer quasi "einstellbar".

Das Gestricke kann vorzugsweise einfädig, zweifädig, dreifädig, vierfädig oder mehrfädig sein. Der Draht des Gestrickes weist typischerweise einen Durchmesser von ca. 0.1 bis 0.5 mm, vorzugsweise von ca. 0.5 mm bis 1.0 mm, oder von ca. 1.0 mm bis 2.6 mm auf.

Das Gestrickematerial des Dämpfungselementes 130 enthält oder besteht vorzugsweise aus Kupfer, Kupferlegierungen, Bronze, Alu und anderen Nichteisenmetallen. Dabei können auch unterschiedliche Werkstoffe verstrickt sein, wenn mehr als eine 2-Fädigkeit vorliegt.

Ferner kann der Draht des Dämpfungselementes 130 Beschichtungen aufweisen, welche reibungsoptimierte, festigkeitssteigernde oder ähnliche Funktionen aufweisen.

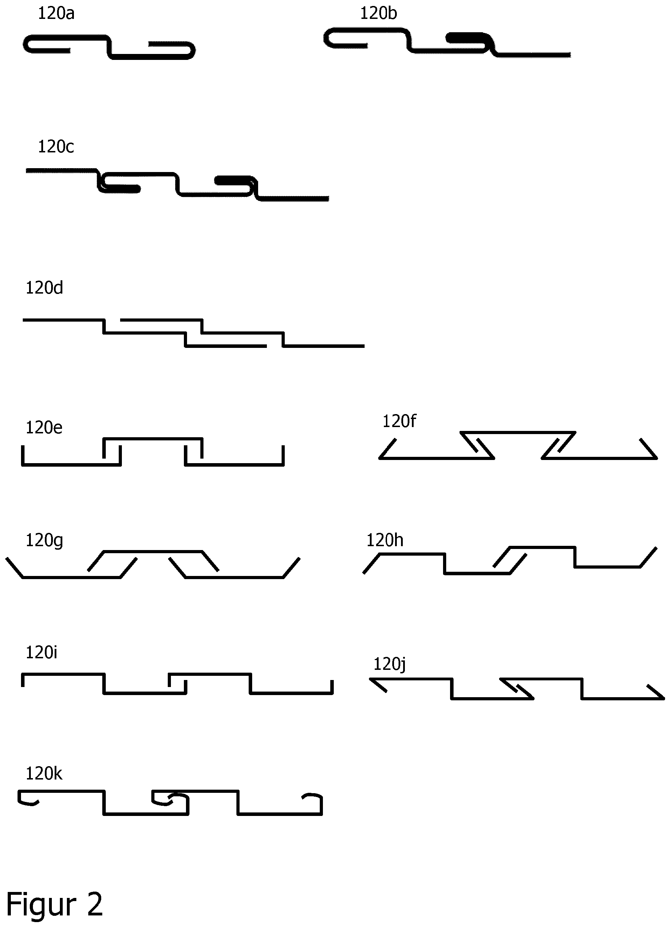

Figur 2 illustriert (nicht abschließend) verschiedene mögliche Bandgeometrien des Innenelementes IE (dargestellt am Längsschnitt durch eine, zwei oder drei Bandwindungen). Gezeigt sind ein Agraffschlauch 120a, ein Agraffschlauch 120b mit Außenschuppen, ein Doppelschuppen-Agraffschlauch 120c mit Innenschuppen und Außenschuppen, sowie weitere überlappende und/oder verhakte Geometrien 120d-120k. Das Material des Innenelementes IE ist vorzugsweise Edelstahl. Die Dicke des Wickelbandes beträgt typischerweise ca. 0.07 mm bis 0.26 mm, vorzugsweise ca. 0.26 mm bis 0.5 mm.

In bevorzugten Ausführungsformen hat das Innenelement IE oder das Außenelement AE einen unrunden Querschnitt (während das jeweils andere Element des Leitungselementes einen runden Querschnitt hat). Besonders bevorzugt ist es, wenn das Innenelement IE einen unrunden und das Außenelement AE einen runden Querschnitt hat.

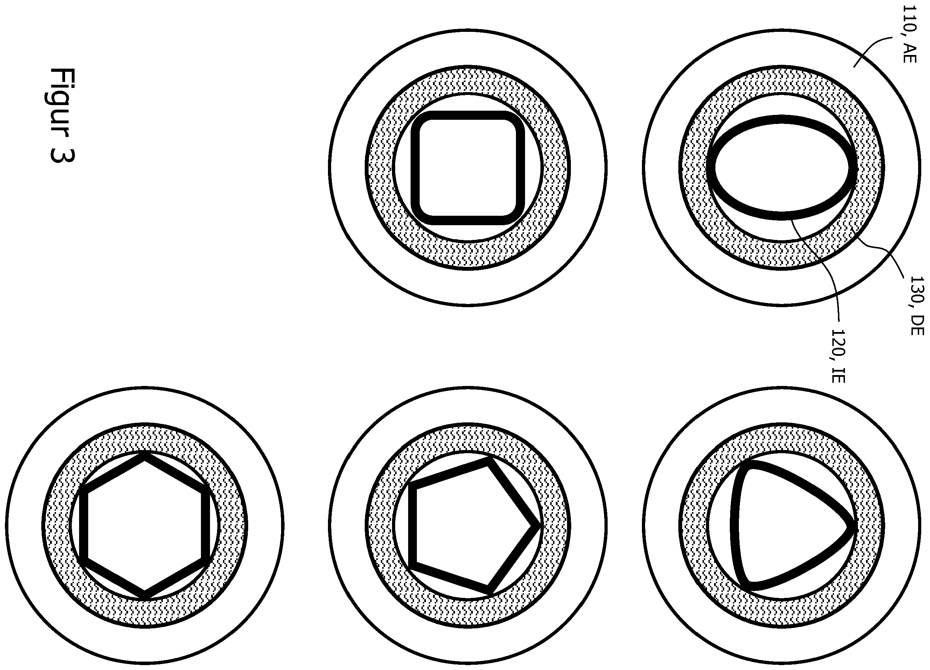

In Figur 3 sind diesbezüglich in fünf Frontansichten von Varianten eines Leitungselementes mit einem unrunden Innenelement 120 und einem kreisrunden Außenelement 110 dargestellt. Das zugehörige Dämpfungselement 130 ist ebenfalls mit einem kreisrunden Querschnitt dargestellt; es wird jedoch im Allgemeinen eine Form annehmen, die mehr oder weniger dem verfügbaren Zwischenraum angepasst ist.

Dargestellt ist ein Innenelement mit einem ovalen, einem dreieckigen, einem viereckigen, einem fünfeckigen, und einem sechseckigen Querschnitt, wobei jedoch auch beliebige andere unrunde Geometrien möglich sind.

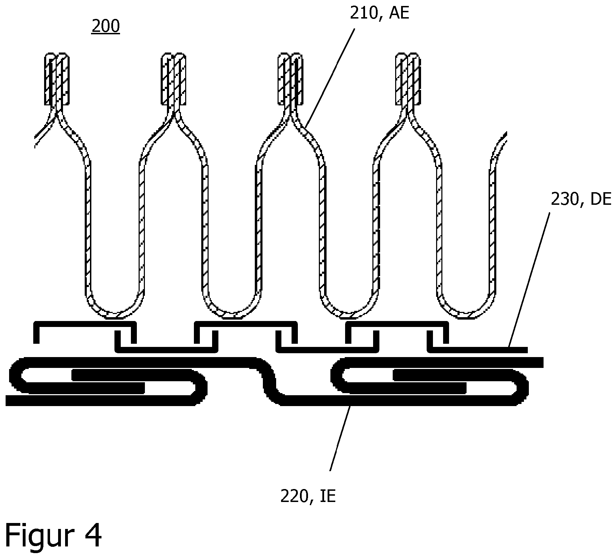

In Figur 4 ist für eine erfindungsgemäße Ausführungsform eines Leitungselementes 200 ein Längsschnitt durch einen axialen Abschnitt der Wand dargestellt. Das Leitungselement 200 enthält die folgenden Komponenten:
- Ein Innenelement 220 bzw. IE, das beispielsweise aus einem Agraffschlauch 120b gemäß Figur 2 gebildet wird.
- Ein Dämpfungselement 230 bzw. DE, welches beispielsweise aus einem verhakten Wickelschlauch 120e gemäß Figur 2 gebildet wird. Vorzugsweise besteht dieses Dämpfungselement 230 aus einem weicheren Material als das angrenzende Innenelement 220 bzw. Außenelement 210, beispielsweise aus Kupfer oder einem Kupferhaltigen Material. Weiterhin ist seine Steifigkeit vorzugsweise geringer als die des Innenelementes 220 und/oder die des Außenelementes 210.
- Ein Außenelement 210 bzw. AE, welches hier aus einem gewickelten Membranbalg besteht.

Das Dämpfungselement 230 ist koaxial zwischen dem innen liegenden Innenelement 220 und dem außen liegenden Außenelement 210 angeordnet. Durch den Kontakt zu Innenelement 220 und Außenelement 210 wirkt der Wickelschlauch 230 dämpfend, und durch eine geeignete Wahl seines Materials verhindert er einen Verschleiß von Innenelement 220 und Außenelement 210.

Die in Figur 2 dargestellten Geometrien lassen sich selbstverständlich auch mit einem Wickelschlauch als Dämpfungselement realisieren, wobei dieser dann einen runden Querschnitt oder auch einen unrunden Querschnitt haben kann. Ein unrunder Querschnitt hat vorzugsweise dieselbe Geometrie (oval, dreieckig, viereckig, fünfeckig etc.) wie das unrunde Innenelement (bzw. das Außenelement, falls dieses unrund ist). Des Weiteren kann auch ein unrundes Dämpfungselement DE mit einem runden Außenelement und einem runden Innenelement kombiniert werden.

Bei allen in den Figuren dargestellten Leitungselementen kann das Außenelement AE optional durch einen Wickelbalg, Wellbalg oder einen im oberen Profilbereich verschweißten, rotationssymmetrischen oder wendelgewellten Membranbalg gebildet werden. Beispiele für solche Außenelement AE finden sich in der DE 10 2008 001 297 A1, DE 10 2011 053 131 A1, und DE 10 2013 104 446 A1.

## Patentansprüche

1. Leitungselement (100, 200) mit
- einem Innenelement (IE), das aus einem flexiblen Wickelschlauch (120, 120a-120k, 220) besteht;
- einem das Innenelement umgebenden Außenelement (AE), das aus einem Wellbalg (110), einer Membranbalgstruktur oder einer gewickelten Balgstruktur (210) besteht;
- einem zwischen Innenelement (IE) und Außenelement (AE) angeordneten Dämpfungselement (DE);
**dadurch gekennzeichnet, dass** das Dämpfungselement (230, DE)
- einen aus einem oder mehreren metallischen profilierten Wickelbändern durch Wickeln hergestellten flexiblen Wickelschlauch (120a-120k, 230) mit mehrlagiger Geometrie und/oder mit verhakter Geometrie der Windungen, oder
- einen Wellbalg, oder
- eine Membranbalgstruktur, oder
- eine gewickelte Balgstruktur enthält oder hieraus besteht.

2. Leitungselement (100, 200) nach Anspruch 1
**dadurch gekennzeichnet, dass** das Dämpfungselement (DE) aus einem leichter verschleißenden Material als das Innenelement (IE) und/oder das Außenelement (AE) besteht.

3. Leitungselement (100, 200) nach mindestens einem der vorhergehenden Ansprüche,
**dadurch gekennzeichnet, dass** das Dämpfungselement (DE) mindestens einen der folgenden Werkstoffe enthält oder hieraus besteht: Kupfer, Kupferlegierungen, Bronze, Zink, Zinkphosphat, Titan, Tantal, Nickel, Nickelbasislegierungen, Aramide, Messing und/oder Molybdänsulfid.

4. Leitungselement (100, 200) nach mindestens einem der vorhergehenden Ansprüche,
**dadurch gekennzeichnet, dass** das Dämpfungselement (DE), das Innenelement (IE), und/oder das Außenelement (AE) zumindest lokal an einer Oberfläche konditioniert ist, insbesondere mittels eines thermischen oder thermochemischen Diffusionsverfahrens oder Oberflächenbeschichtungsverfahrens.

5. Leitungselement (100, 200) nach mindestens einem der vorhergehenden Ansprüche,
**dadurch gekennzeichnet, dass** das Dämpfungselement (DE), das Innenelement (IE) und/oder das Außenelement (AE) zumindest in einem axialen Abschnitt des Leitungselementes einen nicht kreisförmigen Querschnitt aufweist, vorzugsweise einen mehreckigen Querschnitt.

6. Leitungselement (100, 200) nach mindestens einem der vorhergehenden Ansprüche,
**dadurch gekennzeichnet, dass** das Dämpfungselement (DE) eine geringere Steifigkeit aufweist als das Innenelement (IE) und/oder als das Außenelement (AE).

## Claims

1. Line element (100, 200) with
- an inner element (IE), consisting of a flexible stripwound hose (120, 120a-120k, 220);
- an outer element (AE) surrounding the inner element, consisting of a corrugated bellows (110), a membrane bellows structure or a wound bellows structure (210);
- a damping element (DE) arranged between inner element (IE) and outer element (AE);
**characterized in that** the damping element (230, DE) contains or is made of
- a flexible stripwound hose (120a-120k, 230) made of one or more metallic profiled winding strips by winding, with multilayer geometry and/or with interlocked geometry of the windings, or
- a corrugated bellows, or
- a membrane bellows structure, or
- a wound bellows structure.

2. Line element (100, 200) according to claim 1
**characterized in that** the damping element (DE) is made of a more easily wearing material than the inner element (IE) and/or the outer element (AE).

3. Line element (100, 200) according to at least one of the preceding claims,
**characterized in that** the damping element (DE) contains or is made of at least one of the following materials: copper, copper alloys, bronze, zinc, zinc phosphate, titanium, tantalum, nickel, nickel-based alloys, aramids, brass and/or molybdenum sulfide.

4. Line element (100, 200) according to at least one of the preceding claims,
**characterized in that** the damping element (DE), the inner element (IE) and/or the outer element (AE) is conditioned at least locally on a surface, in particular by a thermal or thermochemical diffusion process or surface coating process.

5. Line element (100, 200) according to at least one of the preceding claims,
**characterized in that** the damping element (DE), the inner element (IE) and/or the outer element (AE) has at least in an axial portion of the line element a non-circular cross section, preferably a polygonal cross-section.

6. Line element (100, 200) according to at least one of the preceding claims,
**characterized in that** the damping element (DE) has a lesser stiffness than the inner element (IE) and/or as the outer element (AE).

## Revendications

1. Élément de conduite (100, 200) avec
- un élément intérieur (IE), constitué d'un tuyau flexible enroulé (120, 120a-120k, 220);
- un élément extérieur (AE) entourant l'élément intérieur, qui est constitué d'un soufflet ondulé (110), d'une structure de soufflet à membrane ou d'une structure de soufflet enroulé (210);
- un élément amortisseur (DE) disposé entre élément intérieur (IE) et élément extérieur (AE);
**caractérisé en ce que** l'élément amortisseur (230, DE) contient ou est constitué d'
- un tuyau flexible enroulé (120a-120k, 230) fabriqué par enroulement à partir d'une ou de plusieurs bandes métalliques enroulées et profilées, avec une géométrie multicouche et/ou une géométrie accrochée des spires, ou
- un soufflet ondulé, ou
- une structure de soufflet à membrane, ou
- une structure de soufflet enroulé.

2. Élément de conduite (100, 200) selon la revendication 1
**caractérisé en ce que** l'élément amortisseur (DE) est composé d'un matériau qui s'use plus facilement que l'élément intérieur (IE) et/ou l'élément extérieur (AE).

3. Élément de conduite (100, 200) selon au moins l'une quelconque des revendications précédentes,
**caractérisé en ce que** l'élément amortisseur (DE) contient ou est constitué d'au moins un des matériaux suivants : cuivre, alliages de cuivre, bronze, zinc, phosphate de zinc, titane, tantale, nickel, alliages à base de nickel, aramide, laiton et/ou sulfure de molybdène.

4. Élément de conduite (100, 200) selon au moins l'une quelconque des revendications précédentes,
**caractérisé en ce que** l'élément amortisseur (DE), l'élément intérieur (IE) et/ou l'élément extérieur (AE) est conditionné au moins localement sur une surface, en particulier au moyen d'un procédé de diffusion thermique ou thermochimique ou d'un procédé de revêtement de surface.

5. Élément de conduite (100, 200) selon au moins l'une quelconque des revendications précédentes,
**caractérisé en ce que** l'élément amortisseur (DE), l'élément intérieur (IE) et/ou l'élément extérieur (AE) présente au moins dans une section axiale de l'élément de conduite une section transversale non circulaire, de préférence une section transversale polygonale.

6. Élément de conduite (100, 200) selon au moins l'une quelconque des revendications précédentes,
**caractérisé en ce que** l'élément amortisseur (DE), présente une rigidité inférieure à celle de l'élément intérieur (IE) et/ou à celle de l'élément extérieur (AE).
